# EUROPEAN PATENT SPECIFICATION

(11) **EP 2 958 866 B1**
(45) Date of publication and mention of the grant of the patent: **10.03.2021**
(21) Application number: 14708334.9
(22) Date of filing: 15.01.2014
(51) Int. Cl.: C03C 1/02, C03C 3/064, C03C 3/087, C03C 3/091

(54) **ENERGY EFFICIENT SODA LIME SILICATE GLASS COMPOSITIONS USING BORAX PENTAHYDRATE**
ENERGIEEFFIZIENTE ATEMKALK-SILIKATGLAS-ZUSAMMENSETZUNGEN UNTER VERWENDUNG VON BORAX-PENTAHYDRAT
COMPOSITIONS DE VERRE DE SILICATE SODOCALCIQUE ÉCOÉNERGÉTIQUES UTILISANT DU BORAX PENTAHYDRATÉ

(30) Priority: 19.02.2013 IN 465DE2013
(43) Date of publication of application: 30.12.2015
(73) Proprietor: Council of Scientific & Industrial Research, New Delhi 110 001 (IN)
(72) Inventor: KARMAKAR, Basudeb, Kolkata West Bengal 700 032 (IN); MOLLA, Atiar, Rahaman, Kolkata West Bengal 700 032 (IN); TARAFDER, Anal, Kolkata West Bengal 700 032 (IN); SEN, Ranjan, Kolkata West Bengal 700 032 (IN)
(74) Representative: Hirsch & Associés
(86) International application number: PCT/IN2014/000027
(87) International publication number: WO 2014/128714

(56) References cited:
- BE-A6- 1 017 687
- JP-A- S61 247 642
- US-A- 5 523 264
- US-A1- 2003 004 049
- US-A1- 2010 255 980
- "In vitro dynamic solubility test: influence of various parameters", ENVIRONMENTAL HEALTH PERSPECTIVES, U.S. DEPARTMENT OF HEALTH AND HUMAN SERVICES, NATIONAL INSTITUTE OF ENVIRONMENTAL HEALTH SCIENCES, US, vol. 435, no. 3353, 10 October 2008 (2008-10-10), pages 91-96, XP009106999, ISSN: 0091-6765
- DATABASE WPI Week 2012 Thomson Scientific, London, GB; AN 2012-J54034 XP002724657, ZHENG ZHU: "Producing series of borosilicate bottles with automatic mechanism...", & CN 102 503 081 A (HANGZHOU AIJIA GLASS PRODUCTS CO LTD) 20 June 2012 (2012-06-20)

## Description

The following specification particularly describes the invention and the manner in which it is to be performed:

### FIELD OF THE INVENTION

The present invention relates to energy efficient soda lime silicate glass compositions using borax pentahydrate. In particular, the invention relates to incorporation of boron oxide using low cost borax pentahydrate (Na₂B₄O₇.5H₂O; 47-48 wt. % B₂O₃, 21-22 wt. % Na₂O and 30-31 wt. % H₂O) as raw materials in producing the above mentioned different industrial glasses with simultaneous substitution of the use of soda ash as a source of Na₂O by the incorporation of Na₂O from borax pentahydrate. Here soda lime silicate glass was manufactured by replacing soda ash raw material with borax pentahydrate in the range 25-100 wt%. In addition the CaO component was also replaced by the Na₂O of borax pentahydrate. This activity results in simultaneous incorporation of B₂O₃ in the glass matrix by replacing SiO₂ content. Characterization of the invented glasses were done by the evaluation of their different properties such as coefficient of thermal expansion (CTE), glass transition temperature (T_{g}), glass deformation temperature (T_{d}), refractive index, transmission spectrum, and mechanical properties, etc. The effects of addition of borax pentahydrate at its optimum level (28.5 - 30.3 wt.% B₂O₃) on the glass melting temperature of soda lime silicate glass was also evaluated by viscosity measurement and heating stage microscopic studies, and found to be reduced by -150-200°C. This lowering of glass melting temperature substantially saves energy and reduces the production cost. It eliminates the use of soda ash and limestone, so it reduces the carbon dioxide (CO₂) emission and thereby global warming; thus it is environmentally friendly. Further, it offers a great benefit to the glass industry and opens up a new application of borax pentahydrate. It is observed that the incorporation of boron oxide in the invented silicate glasses reduces their coefficient of thermal expansion, increases their refractive index and hardness. Thus, the evaluated properties of the glasses revealed that these invented glasses are suitable for manufacturing improved quality of container glasses, float glasses and glasses for ophthalmic lens blanks.

### BACKGROUND OF THE INVENTION

The present invention relates to an improved soda-lime-silicate float and container glass composition that yields economic advantages in melting and forming, superior properties such as mechanical, thermal and physical properties. The compositions of commercially produced float and container glass have been standardized over a narrow range in order to achieve a set of properties that are desired for manufacture and subsequent processing of flat/container glass products. Changing the composition by varying one or more constituent in order to tailor one property usually has adverse effects on at least one or more other properties. Glass compositions for production of flat and container glasses are standardized considering minimized melting temperature, surface abrasion resistance, surface weather durability, lower corrosion to refractories, temperability and most importantly the production cost. It is established that reducing the amount of silica and or increasing the alkali content in the glass can lower the melting temperature of the glass and lower the energy consumption for melting, but doing so surface durability of glass product reduces. Loss of glass durability can be compensated by adjusting other constituents but which will result in reduction of working range i.e. the reduction in temperature range in which the glass can be formed without devitrification of the glass. Hence, it has become impractical for flat glass manufacturer, particularly float glass producers to alter the composition in order to achieve melting advantages and energy savings and maintaining and or improving the properties. The glass industry has many segments employing different production processes.

The use of commercial soda lime silicate glasses are increasing tremendously along with the increase in real estate as these glasses has become inevitable to augment the aesthetics of the commercial/ domestic buildings. Other than aesthetics, these glasses are used to protect from the natural calamities, to protect from sunlight etc. in order to control the atmosphere within the house. These glasses are generally used in the flat glass (automotive and construction), glass container (foods, beverages, perfumes and pharmaceuticals) and many other glass industries. The flat glass sector (also commonly referred to as the float glass sector, based on the name of the manufacturing process involved in making flat glass) produces about five million tons of glass per year, with residential and commercial construction and automotive industries comprising about 80 % of the market. The flat glass industry produces glass primarily for the automotive (laminated and tempered glass), and construction (windows and doors) markets. These segments account for 60% and 30% of all flat glass shipments, respectively. The balance is used in sectors such as mirrors, solar panels, signs and optical glass.

The container glass sector is the glass industry's largest producer. Demand in the container glass industry is predicted to expand at a rate of 2.2% annually. The glass container industry represents a very robust market. Beverage bottles account for the lion's share of this industry, with beer bottles leading the way, followed by wine and non-alcoholic drinks bottles. The food container market also has a strong share and other sectors include toiletries and cosmetics, and laboratory glassware. Colored glasses are prominent in this industry, with amber (dark brown) containers for beer and many shades of green containers used for wine. Clear, flint glasses are used for food and drink products.

Other glass industries include lighting; technical glass for video screens, televisions and solar panels; insulation glass (fibers); foam glass; and many other "specialty" glasses.

The glass industry is an ever growing market where state-of-the-art technologies are continually being improved to ensure faster and cheaper production of more sophisticated products. Further, new technical specialty and functionality glasses are continually being introduced to the market, e.g. security, multi-laminated and self-cleaning glasses. Soda-lime silica glass produced by float process and having a strain point of about 510°C is also used as a substrate for plasma display (US patent no. 5780373 and 5858987).

As the construction, automotive and consumer packaged goods industries employ new technical and functional requirements for their glass products, the demand for the high quality soda lime silicate glass will continue to grow - now and for the foreseeable future.

Hence, researchers worldwide are engaged in developing commercial glasses based on soda lime silicate glasses with improved properties at a cheaper cost.

Presently to manufacture soda lime silicate glass soda ash, lime stone and silica is used. The present invention relates to substitution of soda ash and lime stone (Na₂O and CaO) of commercially available soda lime silicate glass by low cost borax pentahydrate raw material for producing glasses with improved properties, in terms of thermal, mechanical, durability and most importantly to reduce the melting temperature in order to achieve production energy savings.

US Patent No. 5,071,796 (James V. Jones and S. M. Ohlberg) discloses flat glass compositions with improved melting and tempering properties. These glasses are having low melting temperatures than standard commercial soda lime silicate glasses and these are achieved by partially replacing high melting alumina with silica. However, the drawbacks of the invention are that the most important, i.e. optical properties which are essential for the application in optical areas and particularly in window glass are not addressed. Coefficient of thermal expansion (CTE) of the glasses developed by them is higher (10.44 x 10⁻⁶ /°C) compared to the standard float glass (8.62 x 10⁻⁶ /°C). This will eventually impair the thermal shock resistance of the glass.

Reference may be made to US Patent No. 346768 (Ernst Winter et. al) wherein development of soda-lime silicate glass containing vanadium has been reported which demonstrates high UV absorption for wavelengths below 350 nm and this can be used for manufacturing glass containers, such as bottles in which UV-sensitive food stuffs, such as, for example, milk, yogurt, juices containing vitamins or the like, are transported and stored. It has been claimed that this glass can be produced by cost effective manner but details about how this cost effectiveness is achieved has not been elaborated. However, main shortcomings of this invention are that it did not compare other essential properties, such as thermal, mechanical, optical transmission properties etc. with standard commercially available soda-lime silicate glasses.

Reference may be made to US Patent No. 5362689 (Shigeki Morimoto et. al) which is related to the invention of a well balanced visible light transmittance and infrared and ultraviolet ray absorbing glass suitable for use in building and vehicle window, which comprises of a modified soda-lime silicate glass composition incorporated with relatively small and strictly specified amounts of iron oxide, cerium oxide, and titanium oxide together with a very small amount of manganese oxide. As per their claim the invented glass is having high Young's modulus, Poisson's ratio and thermal expansion co-efficient. However, exact data related to these properties have not been reported and optical transmittance has been reported as about 70 % which is low if considered for window applications. High thermal expansion of this glass will also lead to the poor thermal shock resistance. US Patent no. 5364820 (Shigeki Morimoto et. al) discloses the invention of neutral gray-colored infrared and ultra violet radiation absorbing glass by modifying the composition of soda-lime silicate glasses by incorporating limited amounts of iron oxide, CeO₂ and trace amounts of CoO and Se in order to modify the coloration and optical characteristics of the glass. Though optical properties and temper ability are reported, however, other essential properties such as physical, thermal, melting temperature, mechanical properties, durability etc. are not mentioned. Reference may be made to US Patent No. 5478783 (P. L. Higby and B. E. Penrod) wherein compositions based on soda-lime-silica modified by incorporating cobalt oxide, iron oxide, nickel oxide and TiO₂ to achieve infrared and ultraviolet absorbing glass for use in windows of vehicles have been reported. Though optical transmittance properties are reported but other essential properties of the invented glass are not been discussed.

Reference may be made to US patent no. 5558942 (M. Itoh and T. Kijima) wherein soda-lime-silica based compositions have been modified by incorporating V₂O₅ and Fe₂O₃ to develop ultraviolet ray absorbent colored glass for buildings and vehicles has been reported. Only luminous transmittance and ultra-violet ray transmittance properties are evaluated, however, other essential physical, thermal, mechanical properties, durability etc. are not discussed. This patent also did not mention about effect of such alternation of composition on melting temperatures.

US patent no. 6063718 (N. E. Khilati et. al) discloses soda-lime-silica glass compositions and their applications. They invented glass compositions which are suitable for production of glass ribbons from which panes can be cut. According to their claim these glasses are fire resistant; hence, these can be used to make fire-resistant glazing or can serve as substrates for the manufacture of plasma screens, electroluminescent screens and cold cathode screens. However, main shortcomings of this patent are that it did not mention about the effect of these compositions on melting temperatures and optical, mechanical properties.

US patent no.7754631 mentioned about invention of alkali-free glass substrate, which has a high Young's modulus, a low linear expansion coefficient, a high strain point and a low density, does not devitrify in the float forming process and posses excellent acid resistance property. The composition of the glass invented by the group is having melting temperature of up to 1630°C which is quite high in respect to the manufacturing cost point of view.

Borax pentahydrate (Na₂B₄O₇.5H₂O) is the refined form of sodium borate minerals such as borax (Na₂B₄O₇.10H₂O) and kernite (Na₂B₄O₇.4H₂O). Borax pentahydrate consists of 47-48 wt. % B₂O₃, 21 -22 wt. % Na₂O and 30-31 wt. % H₂O. It is an important multifunctional source of B₂O₃, particularly processes in which the simultaneous presence of Na₂O is beneficial. Borax pentahydrate, therefore, seems to be a potential raw material which could beneficially be used in manufacturing of several industrial glasses.

Document US 5,523,264 discloses fiberizable glass compositions suitable for insulation consisting essentially of:
45.0 to 60.0 wt. % of SiO₂
0.0 to 3.0 wt.% of Al₂O₃
7.0 to 14.0 wt.% of CaO + MgO
14.0 to 22.0 wt.% of Na₂O + K₂O
8.0 to 20.0 wt.% of B₂O₃,
   the remainder being up to 3% BaO, and less than 1% of any or all of Fe₂O₃, TiO₂, SrO or SO₂, the total being 100% by weight.

Document BE-A-1017687 discloses a mixture for the manufacture of glass fibers, characterized in that it comprises the following materials according to the weight percentages: sodium carbonate 8 to 10%, dolomite 2-8%, borax pentahydrate 6-11%, cullet 40 to 65%, sand 15-30%, limestone 2 to 6% and nepheline 0 to 1.5%.

Document US 2010/0255980 discloses a high transmission low iron glass that includes boron oxide. It comprises a total iron content (expressed as Fe₂O₃) in the range of 0.005 to 0.03 % and a boron oxide content in the range of 0.5 to 1.5 %.

In summary, the major problems of the hitherto known glasses as described herein above for the incorporation of borax pentahydrate raw materials in industrial soda- lime-silica glass are:
a) As far our knowledge goes, there is no report available in patents, literature and public domain regarding incorporation of B₂O₃ replacing SiO2 by borax pentahydrate as a raw material with simultaneous substitution of the use of soda ash as a source of Na2O by the incorporation of Na2O from borax pentahydrate in soda-lime-silica glasses.
b) All the above mentioned reports are mainly related to the development of new composition and or change of minor constituents of the existing composition of standard soda-lime-silica glass to achieve a particular set of properties. However, incorporation of cheaper varieties of raw materials abundantly available are not exploited for reducing the melting temperature of soda-lime-silica glass in order to radically reduce the production cost by obtaining the similar or even improved properties.
c) None of these patents mentioned about all essential properties of soda-lime-silica glass such as, optical, thermal, mechanical and physical properties which are essential in order to assess their suitability for various applications.

Hence, there is an obvious need to develop new compositions by incorporating low cost borax pentahydrate raw materials abundantly available by replacing Na₂O and CaO of soda-lime-silicate glass in order to substantially reduce melting temperature of the glass which in turn will drastically reduce the production cost and to achieve at least similar or better set of properties of soda-lime-silica glass.

### OBJECTS OF THE INVENTION

Main objective of the present invention is to incorporate boron oxide (B₂O₃) and invent the composition by replacing silicon dioxide (SiO₂) of soda-lime silicate glass composition using borax pentahydrate as raw material for manufacturing different industrial glasses.

Another object of the present invention is to substitute soda ash source of Na₂O simultaneously using the available Na₂O from borax pentahydrate as raw material. Yet another object of the present invention is to establish the composition of soda lime silicate glass by replacing soda ash raw material with borax pentahydrate in the range 25-100%.

Yet another object of the present invention is to establish the composition of soda lime silicate glass by replacing CaO with Na₂O of borax pentahydrate and simultaneous replacement of SiO₂ by B₂O₃ of borax pentahydrate.

Still another object of the present invention is to lowering of melting temperature of soda lime silicate glass by addition of borax pentahydrate at its optimum level and ascertain the maximum lowering of melting temperature by measurement of high temperature molten glass viscosity.

Yet another object of the present invention is to establish the properties of new glass compositions which ascertain the improvement of container and float glasses. Still another object of the present invention is to establish the glass chemical composition for the most popular "white crown" type ophthalmic glass of refractive index 1.523.

### SUMMARY OF THE INVENTION

Accordingly, present invention provides energy efficient soda lime silicate glass composition using borax pentahydrate comprising (wt.%) B₂O₃ = 28.5-30.3 wt.%, SiO₂ = 22.68-74.62 wt.%, Na₂O = 13.0-23.5 wt.%, CaO = 0.0-10.5 wt.%, K₂O = 0.03-0.3 wt.%, Al₂O₃ = 0.15-1.3 wt.%, MgO = 0.43-4.0 wt.%, and Fe₂O₃+TiO₂ = 0.05-0.12 wt.%.

In an embodiment of the present invention, the said glasses have density in the range of 2.312-2.575 g.cm⁻³.

In another embodiment of the present invention said composition is useful for manufacturing container, float and ophthalmic glasses.

In yet another embodiment of the present invention, the said glasses have coefficient of thermal expansion (CTE, 50-300°C) in the range of (71.4-90.6) x 10⁻⁷ K⁻¹.

In yet another embodiment of the present invention, the said glasses have glass transition temperature (T_{g}) in the range of 506-595°C.

In yet another embodiment of the present invention, the said glasses have dilatometric softening point or temperature (T_{d}) in the range of 540-634°C.

In yet another embodiment of the present invention, the said glasses have dielectric constant in the range of 7.41-10.23.

In yet another embodiment of the present invention, the said glasses have refractive index in the range of 1.5058-1.5337.

In yet another embodiment of the present invention, the said glasses have optical transmission at 550 nm for the glass thickness of 2.0 mm in the range of 83-90%.

In yet another embodiment of the present invention, the said glasses have viscosity in the range of 1.36-1.85 dPa.s in the temperature range of 1150-1400°C.

In yet another embodiment of the present invention, the said glasses have the Vicker's hardness in the range of 5.54 - 6.50 GPa.

In yet another embodiment, present invention provides a process for the preparation of borax pentahydrate originated B₂O₃ incorporated soda lime silicate glasses as claimed in claim 1 and the said process comprising the steps of:
i. mixing 12.45 to 79.35% by weight Borax pentahydrate, 0.31 to 3.41% by weight Feldspar, 16.75 to 54.51% by weight Quartz, 0.0 to 15.20% by weight Soda ash, 0.08 to 0.63% by weight Alumina, 0.0 to 15.46% by weight Calcium carbonate, 0.32 to 3.32% by weight Magnesium oxide and 0.008 to 0.017% by weight Titanium dioxide for a period in the range of 10 to 20 minutes to obtain an uniform mixture;
ii. melting the mixture as obtained in step (i) at temperature in the range of 1500 to 1600°C for period in the range of 1.0 to 2.0 h with 1 to 2 intermittent stirring for 0.4 to 0.6 min each to obtain homogenize glass melt;
iii. quenching the glass melt as obtained in step (ii) at temperature in the range of 1500 to 1600°C followed by casting and annealing to obtain borax pentahydrate originated boron oxide (B₂O₃) incorporated soda lime silicate glasses.

In the present invention, the addition of borax pentahydrate originated boron oxide (B₂O₃) at its optimum level (28.5 - 30.3 wt.%) in the soda lime silicate glass reduce the glass melting temperature by at least 150-200°C.

### BRIEF DESCRIPTION OF THE DRAWINGS

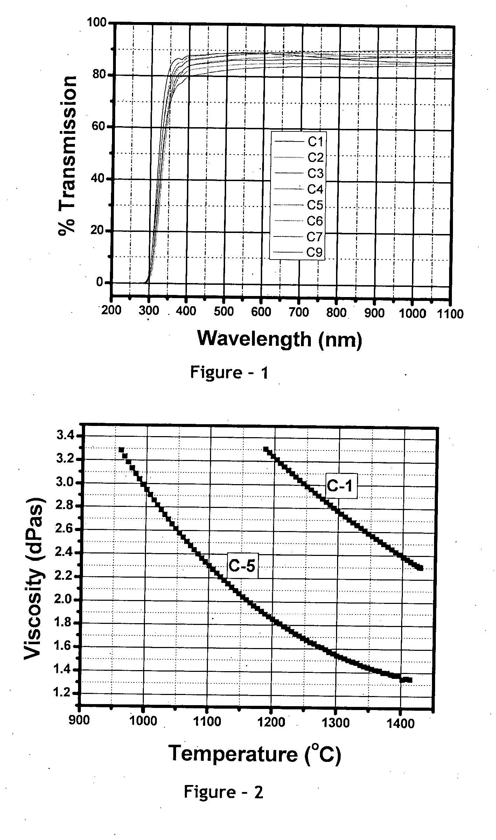

Figure 1 represents transmission spectra of container glass samples C-1 to C-9 as a function of wavelength.
Figure 2 represents variation of viscosity of glass sample C-1 (blank container glass, 0.0 wt.% B₂O₃) and C-5 (100 % Na₂O is replaced by Na₂O of BP, 28.5 wt.% B₂O₃) as a function of temperature.
**Figure 3** represents variation of shrinkage and starting of batch melting of glass sample C-1 (blank container glass, 0.0 wt.% B₂O₃) and C-5 (100 % Na₂O is replaced by Na₂O of BP, 28.5 wt.% B₂O₃) as a function of temperature.
**Figure 4** represents transmission spectra of container glass samples F-1 to F-8 as a function of wavelength.
**Figure 5** represents variation of viscosity of glass sample F-1 (blank float glass) and F-5 (100 % Na₂O is replaced by Na₂O of BP) as function of temperature.
**Figure 6** represents variation of shrinkage and starting of batch melting of glass sample F-1 (blank container glass, 0.0 wt.% B₂O₃) and F-5 (100 % Na₂O is replaced by Na₂O of BP, 30.3 wt.% B₂O₃) as a function of temperature.

### DETAILED DESCRIPTION OF THE INVENTION

The present invention relates to energy efficient soda lime silicate glass compositions using borax pentahydrate. In particular, the invention relates to incorporation of boron oxide using low cost borax pentahydrate (Na₂B₄O₇.5H₂O; 47-48 wt. % B₂O₃, 21-22 wt. % Na₂O and 30-31 wt. % H₂O) as raw materials in producing the above mentioned different industrial glasses with simultaneous substitution of the use of soda ash as a source of Na₂O by the incorporation of Na₂O from borax pentahydrate. Here soda lime silicate glass was manufactured by replacing soda ash raw material with borax pentahydrate in the range 25-100 wt%. In addition the CaO component was also replaced by the Na₂O of borax pentahydrate. This activity results in simultaneous incorporation of B₂O₃ in the glass matrix by replacing SiO₂ content. Characterization of the invented glasses were done by the evaluation of coefficient of thermal expansion (CTE), glass transition temperature (T_{g}), glass deformation temperature (T_{d}), deformation behaviour of glass blocks at elevated temperatures, refractive index, transmission spectrum, and mechanical properties. The effect of addition of borax pentahydrate at its optimum level on the melting temperature of soda lime silicate glass was also evaluated by viscosity measurement and heating stage microscopic studies, and found to be reduced by 150-200°C. This lowering of glass melting temperature substantially reduces the production cost and saves energy. It offers a great benefit to the glass industry and opens up a new application of borax pentahydrate. It is observed that the incorporation of boron oxide in the invented silicate glasses reduces their coefficient of thermal expansion, increases their refractive index and hardness. Thus, the evaluated properties of the glasses revealed that these invented glasses are suitable for manufacturing improved quality of container glasses, float glasses and glasses for ophthalmic lens blanks. In an embodiment, the present invention provides a process for preparing the energy efficient container and float glass of superior quality, wherein the steps comprising:
a) Borax pentahydrate originated boron oxide (B₂O₃) incorporated soda lime silicate glasses, wherein the glasses have the compositions in weight percent (wt.%) in the ranges: B₂O₃ = 28.5-30.3 wt.%, SiO₂ = 22.68-74.62 wt.%, Na₂O = 13.0-23.5 wt.%, CaO = 0.0-10.5 wt.%, K₂O = 0.03-0.3 wt.%, Al₂O₃ = 0.15-1.3 wt.%, MgO = 0.43-4.0 wt.%, and Fe₂O₃+TiO₂ = 0.05-0.12 wt.% ;
b) Glass preparation activity were carried out following a typical soda lime silicate container glass composition as provided in **Table 2** (Sample C-1) and a typical soda lime silicate float glass composition as provided in **Table 5** (Sample F-1).
c) Melting of soda lime silicate glass (container and float glasses) by replacing soda ash raw material using borax pentahydrate in the range 25-100%, and the glass composition is provided in Table 2 for container glass (sample C-2, C-3, C-4 and C-5 respectively) and in **Table 5** for float glass (sample F-2, F-3, F-4 and F-5 respectively).
d) The glasses were prepared by melting in the range 1500° to 1600°C in a platinum crucible for 1 to 2 h with intermittent 1 to 2 stirrings for 0.5 - 1.0 minute followed by casting on an iron mould and subsequently annealed properly.
e) They were sized and polished as required for different property evaluation. The set of glass compositions of borax pentahydrate originated sodium oxide (Na₂O) incorporated soda lime silicate container glasses, wherein the said glasses having melting temperature (Tₘ) of 899°C compared to commercial container glass which shows melting behaviour at 1153°C. A huge reduction in melting temperature of 254°C has been observed for the glasses obtained by replacing 100 % of Na₂O of soda ash with Na₂O of BP. In the case of float glass remarkable melting temperature drop of 240°C has been observed in the borax pentahydrate originated sodium oxide (Na₂O) incorporated soda lime silicate container glasses (melting temperature, 874°C), compared to the commercial float glass (1114°C).

The set of glass compositions of borax pentahydrate originated boron oxide (B₂O₃) incorporated soda lime silicate glasses, wherein the said glasses eliminate the use of soda ash (Na₂CO₃), so it reduces the carbon dioxide (CO₂) emission and global warming; thus these compositions are environmentally friendly.

The set of glass compositions the addition of borax pentahydrate originated boron oxide (B₂O₃) at its optimum level (28.5 - 30.3 wt.%) in the soda lime silicate glass reduce the glass melting temperature by at least 150-200°C. Thus it saves energy; hence the glass compositions are energy efficient and cost effective.

### Raw Materials

The raw materials used were borax pentahydrate, quartz, feldspar, soda ash, calcium carbonate and magnesium oxide. Since the chemical composition of the staring materials has the predominant role, so their chemical compositions are given below in **Table 1.**

**Table 1. Chemical Composition (wt.%) of Borax Pentahydrate (BP) and other raw materials**

| Component | Borax Penta hydrate | Quartz | Feldspar | Soda Ash | Calcium Carbonate | Magnesium Oxide |
|---|---|---|---|---|---|---|
| B₂O₃ | 47.8 - 48.5 | - | - | - | - | - |
| SiO₂ | 0.023 | 99.24 | 74.40 | - | - | - |
| Fe₂0₃ | 0.0035 | 0.04 | 0.08 | 0.04 | 0.02 | 0.05 |
| Al₂O₃ | 0.024 | - | 13.13 | - | - | - |
| CaO | 0.025 | - | 0.67 | - | 99.00 | |
| MgO | 0.008 | - | - | - | - | 99.00 |
| NaCl | 0.003 | - | - | - | - | - |
| Na₂SO₄ | 0.015 | - | - | - | - | - |
| Na₂O | 21.6 | - | 2.87 | 56.12 | - | - |
| K₂O | - | - | 7.28 | | - | - |
| CO₂ | - | - | | 42.82 | - | - |
| Moisture | 30.4885-29.7885 | 0.72 | 1.57 | 1.02 | 0.98 | 0.95 |
| Insolubles in water | 0.01 | - | - | - | - | - |

### Glass Preparation

Glass preparation activity were carried out following a typical soda lime silicate container glass composition as provided in **Table 2** (Sample C-1) and a typical soda lime silicate float glass composition as provided in **Table 5** (Sample F-1). The glasses were prepared by melting at 1500°-1600°C in a platinum crucible for 1-2 h with intermittent 1-2 stirrings for 0.5 - 1.0 minute followed by casting onto an iron mould and subsequently annealed properly. They were sized and polished as required for different property evaluation.

### Soda lime silicate based container glasses

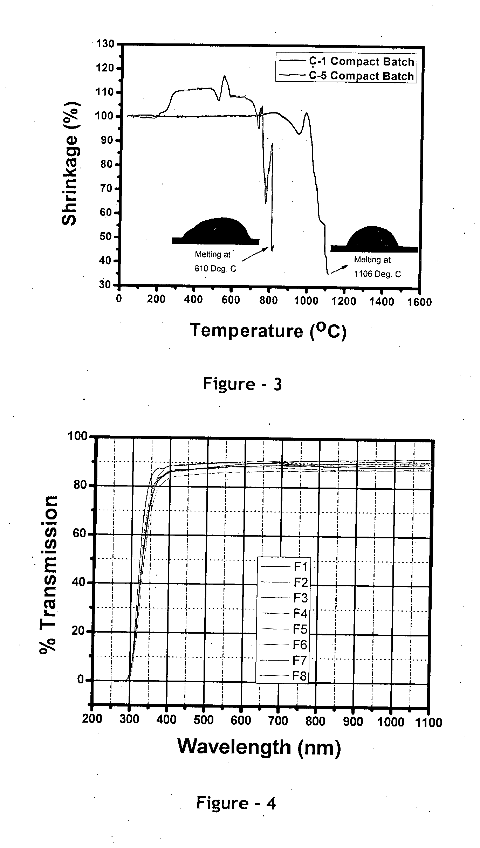

The detailed compositions of the glasses were provided in **Table 2.** Here soda (Sodium oxide, Na₂O) content of these glasses was gradually replaced by soda (Sodium oxide, Na₂O) as incorporated from borax pentahydrate instead of using soda ash. At the same time, silica content of glass was replaced by boron oxide (B₂O₃) of borax pentahydrate (BP) equivalent to soda content. Similarly lime (Calcium oxide, CaO) was gradually replaced by soda (Sodium oxide, Na₂O) obtained from borax pentahydrate and at the same time, silica content of glass was replaced by boron oxide of borax pentahydrate (BP) equivalent to soda content. Their evaluated properties are shown in Table 3. It is seen that density (increases then decreases) varies in the range 2.312-2.575 g.cm⁻³, coefficient of thermal expansion (CTE) (decreases): (71.4 - 89.8) x x10⁻⁷ K⁻¹ (50-300°C), T_{g} : 506 - 595°C (increases then decreases), T_{d} : 540 - 634°C (increases then decreases), dielectric constant: 7.41-8.18 (increases then decreases), refractive index (increases then decreases): 1.5058-1.5300, and transmission: 83-89%. Their transmission spectra are shown in **Figure** - **1.** The plot of viscosity as a function of temperature of glass samples is shown in **Figure - 2** and summarized in **Table 4.** It is seen that the similar viscosity value could be obtained nearly 150-200°C lower temperature in the glasses after replacement of soda and silica by BP. Under this replacement the glass preserves its stability. This viscosity data indicates that the glasses could be melted at least 100°C lower temperature (if not more) which results in energy saving in industry and obviously reduction in production cost. To further, confirm this phenomenon of change in melting behaviour, experiments using heating microscope was conducted with glass block/batch. The glass compositions of borax pentahydrate originated sodium oxide (Na₂O) incorporated soda lime silicate container glass shows melting temperature (Tₘ) of 899°C compared to commercial container glass which shows melting behaviour at 1153°C. A huge reduction in melting temperature of 254°C has been observed for the glasses obtained by replacing 100% of Na₂O of soda ash with Na₂O of BP. A reduction of batch melting temperature of 296°C is also observed in the heating microscope experiment, which is shown in **Fig. 3****.**

**Table 2. Composition (wt.%) of container glasses and replacement done by borax pentahydrate (BP)**

| Sampl e No. | B₂O₃ | SiO₂ | Na₂O | CaO | K₂O | Al₂O₃ | MgO | Fe₂O ₃+Ti O₂ | Tot al | Replacement of silica by B₂O₃ of BP (wt.%) | Replacemen t of Na₂O by Na₂O of BP (wt.%) | Replacement of CaO by Na₂O of BP (wt.%) |
|---|---|---|---|---|---|---|---|---|---|---|---|---|
| C-1 | -- | 74.42 | 13.00 | 10.50 | 0.30 | 1.30 | 0.43 | 0.05 | 100 | 0.0 | 0.0 | 0.0 |
| C-2 | 7.19 | 67.23 | 13.00 | 10.50 | 0.30 | 1.30 | 0.43 | 0.05 | 100 | 9.66 | 25 | 0.0 |
| C-3 | 14.39 | 60.03 | 13.00 | 10.50 | 0.30 | 1.30 | 0.43 | 0.05 | 100 | 19.34 | 50 | 0.0 |
| C-4 | 21.58 | 52.84 | 13.00 | 10.50 | 0.30 | 1.30 | 0.43 | 0.05 | 100 | 29.00 | 75 | 0.0 |
| C-5 | 28.50 | 45.92 | 13.00 | 10.50 | 0.30 | 1.30 | 0.43 | 0.05 | 100 | 38.30 | 100 | 0.0 |
| C-6 | 36.25 | 38.17 | 16.50 | 7.00 | 0.30 | 1.30 | 0.43 | 0.05 | 100 | 48.71 | 100 | 33.3 |
| C-7 | 44.00 | 30.42 | 20.00 | 3.50 | 0.30 | 1.30 | 0.43 | 0.05 | 100 | 59.12 | 100 | 66.67 |
| C-8 | 51.74 | 22.68 | 23.50 | 00.00 | 0.30 | 1.30 | 0.43 | 0.05 | 100 | 69.52 | 100 | 100 |

**Table 3. Evaluated properties of container glasses and replacement done by borax pentahydrat (BP)**

| Sample No. | Density, g.cm⁻³ | CTE, x10⁻ 7 K⁻¹ (50-300°C) | T_{g} (°C) | T_{d} (°C) | Dielectric Constant | Refractive Index, n (at 633 nm) | Transmission (%T), at 550 nm (t=2 mm) |
|---|---|---|---|---|---|---|---|
| C-1 | 2.490 | 89.8 | 573 | 608 | 8.01 | 1.5106 | 89 |
| C-2 | 2.538 | 84.8 | 588 | 634 | 8.18 | 1.5243 | 89 |
| C-3 | 2.575 | 79.5 | 595 | 628 | 7.99 | 1.5277 | 83 |
| C-4 | 2.513 | 74.9 | 595 | 628 | 7.87 | 1.5300 | 83 |
| C-5 | 2.491 | 71.4 | 589 | 633 | 7.53 | 1.5291 | 87 |
| C-6 | 2.463 | 74.6 | 568 | 604 | 7.59 | 1.5266 | 89 |
| C-7 | 2.391 | 81.4 | 536 | 572 | 7.41 | 1.5180 | 86 |
| C-8 | 2.312 | 82.6 | 506 | 540 | 7.56 | 1.5058 | 89 |
| Effect | Increase then decrease | Decrease | Increase then decrease | Increase then decrease | Increase then decrease | Increase then decrease | Decrease |

| | | | | | | | |
|---|---|---|---|---|---|---|---|
| CTE : Coefficient of thermal expansion; T_{g} : Glass transition temperature; T_{d} : Dilatometric softening point | | | | | | | |

**Table 4. Viscosity at various temperature of glass samples C-1 (blank container glass, 0.0 wt.% B₂O₃) and C-5 (100 % Na₂O is replaced by Na₂O of BP, 28.5 wt.% B₂O₃)**

| **Temperature (°C)** | **Viscosity of C-1 (dPas)** | **Viscosity of C-5 (dPas)** |
|---|---|---|
| 1200 | 3.2365 | 1.8496 |
| 1250 | 2.9948 | 1.6821 |
| 1300 | 2.7735 | 1.5426 |
| 1350 | 2.5706 | 1.4383 |
| 1400 | 2.3923 | 1.3587 |

### Soda lime silicate based float glasses

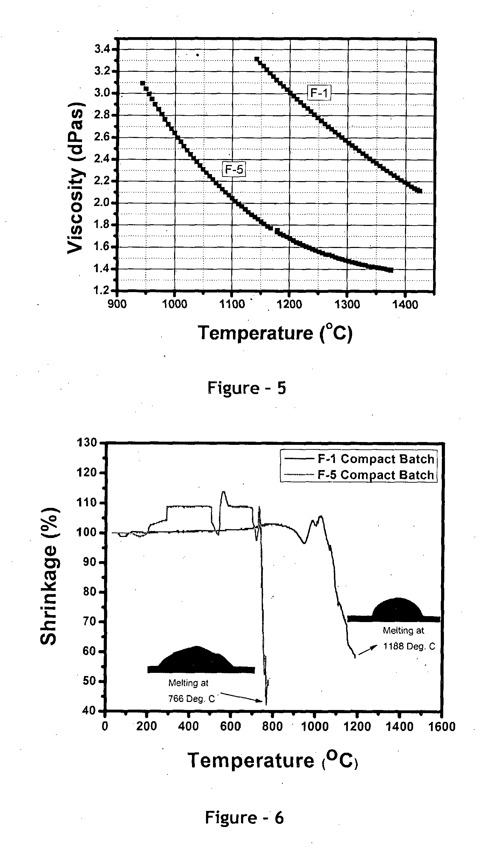

The detailed compositions of the glasses were provided in **Table 5.** Here soda (Sodium oxide, Na₂O) content of these glasses was gradually replaced by soda (Sodium oxide, Na₂O) as incorporated from borax pentahydrate instead of using soda ash. At the same time, silica content of glass was replaced by boron oxide (B₂O₃) of borax pentahydrate (BP) equivalent to soda content. Similarly lime (calcium oxide, CaO) was gradually replaced by soda (Sodium oxide, Na₂O) obtained from borax pentahydrate and at the same time, silica content of glass was replaced by boron oxide of borax pentahydrate (BP) equivalent to soda content. Their evaluated properties are shown in **Table 6.** It is seen that density (increases then decreases) varies in the range 2.375-2.545 g.cm⁻³, coefficient of thermal expansion (CTE) (decreases): (74.3-90.6) x10⁻⁷ K⁻¹ (50-300°C), T_{g} : 526-586°C (increases then decreases), T_{d} : 562-632°C (increases then decreases), dielectric constant: 9.08-10.23 (decreases), refractive index (increases then decreases): 1.5168-1.5337, and transmission: 86-90%. Their transmission spectra are shown in Figure - 4. The plot of viscosity as a function of temperature of glass samples is shown in Figure - 5 and summarized in **Table 7.** It is seen that the similar viscosity value could be obtained nearly 150-200°C lower temperature in the glasses after replacement of soda and silica by BP. Under this replacement the glass preserves its stability. This viscosity data indicates that the glasses could be melted at least 100°C lower temperature (if not more) which results in energy saving in industry and obviously production cost reduction. To further, confirm this phenomenon of change in melting behaviour, experiments using heating microscope was conducted with glass block/batch. The glass compositions of borax pentahydrate originated sodium oxide (Na₂O) incorporated soda lime silicate float glass shows melting temperature (Tₘ) of 874°C compared to commercial float glass which shows melting behaviour at 1114°C. A huge reduction in melting temperature of 240°C has been observed for the glasses obtained by replacing 100 % of Na₂O of soda ash with Na₂O of BP. A reduction of batch melting temperature of 422°C is also observed in the heating microscope experiment, which is shown in **Fig. 6****.**

**Table 5. Composition (wt.%) of float glasses and replacement done by borax pentahydrate (BP**

| Sample ID | B₂O₃ | SiO₂ | Na₂O | CaO | K₂O | Al₂O₃ | MgO | Fe₂O₃+ TiO₂ | Total | Replacement of silica by B₂O₃ of BP (wt.%) | Replacement of Na₂O by Na₂O of BP (wt.%) | Replacement of CaO by Na₂O of BP (wt.%) |
|---|---|---|---|---|---|---|---|---|---|---|---|---|
| F1 | - | 73.00 | 13.70 | 9.00 | 0.03 | 0.15 | 4.00 | 0.12 | 100 | 0.0 | 0.0 | 0.0 |
| F2 | 7.58 | 65.42 | 13.70 | 9.00 | 0.03 | 0.15 | 4.00 | 0.12 | 100 | 10.38 | 25 | 0.0 |
| F3 | 15.16 | 57.84 | 13.70 | 9.00 | 0.03 | 0.15 | 4.00 | 0.12 | 100 | 20.77 | 50 | 0.0 |
| F4 | 22.74 | 50.26 | 13.74 | 9.00 | 0.03 | 0.15 | 4.00 | 0.12 | 100 | 31.15 | 75 | 0.0 |
| F5 | 30.30 | 42.70 | 13.70 | 9.00 | 0.03 | 0.15 | 4.00 | 0.12 | 100 | 41.51 | 100 | 0.0 |
| F6 | 36.94 | 36.06 | 16.70 | 6.00 | 0.03 | 0.15 | 4.00 | 0.12 | 100 | 50.60 | 100 | 33.33 |
| F7 | 43.58 | 29.42 | 19.70 | 3.00 | 0.03 | 0.15 | 4.00 | 0.12 | 100 | 59.70 | 100 | 66.67 |
| F8 | 50.21 | 22.79 | 22.70 | 0.00 | 0.03 | 0.15 | 4.00 | 0.12 | 100 | 68.78 | 100 | 100 |

**Table 6. Evaluated properties of float glasses and replacement done by borax pentahydrate (BP)**

| Sample ID | Density, g.cm⁻³ | CTE, x10⁻⁷ K⁻¹ (50-300°C) | T_{g} (°C) | T_{d}(°C) | Dielectric Constant | Refractive Index, n (at 633 nm) | Transmission (%T), at 550 nm (t=2 mm) |
|---|---|---|---|---|---|---|---|
| F1 | 2.505 | 90.6 | 563 | 612 | 10.23 | 1.5182 | 90 |
| F2 | 2.530 | 85.7 | 578 | 621 | 10.12 | 1.5228 | 88 |
| F3 | 2.534 | 80.9 | 586 | 631 | 10.00 | 1.5297 | 88 |
| F4 | 2.545 | 77.4 | 584 | 632 | 9.85 | 1.5333 | 88 |
| F5 | 2.517 | 74.3 | 579 | 616 | 9.33 | 1.5337 | 86 |
| F6 | 2.494 | 77.5 | 564 | 604 | 9.08 | 1.5332 | 90 |
| F7 | 2.404 | 77.7 | 551 | 587 | 9.64 | 1.5261 | 89 |
| F8 | 2.375 | 82.1 | 526 | 562 | 9.49 | 1.5168 | 89 |
| Effect | Increase then decrease | Decrease | Increase then decrease | Increase then decrease | Decrease | Increase then decrease | Decrease |

| | | | | | | | |
|---|---|---|---|---|---|---|---|
| CTE : Coefficient of thermal expansion; T_{g} : Glass transition temperature; T_{d} : Dilatometric softening point | | | | | | | |

**Table 7. Viscosity at various temperature of glass samples F-1 (blank float glass, 0.0 wt.% B₂O₃) and F-5 (100 % Na20 is replaced by Na₂O of BP, 30.3 wt.% B₂O₃)**

| **Temperature (°C)** | **Viscosity of F-1 (dPas)** | **Viscosity of F-5 (dPas)** |
|---|---|---|
| 1150 | 3.2671 | 1.8290 |
| 1200 | 3.0132 | 1.6783 |
| 1250 | 2.7757 | 1.5615 |
| 1300 | 2.5637 | 1.4786 |
| 1350 | 2.3667 | 1.4192 |

### EXAMPLES

*The following examples are given by way of illustration only and therefore should not be construed to limit the scope of the present invention.*

### EXAMPLE-1

The starting raw materials were mixed in such a proportion that the resultant batch comprises the composition of sample C-2 as mentioned in Table 2. Glass batch (Borax pentahydrate = 15.05 g, Feldspar = 4.12 g, Quartz = 64.66 g, Alumina = 0.76 g, Calcium carbonate = 18.70 g, Soda ash = 17.16 g, Magnesium oxide = 0.43 g, and Titanium dioxide = 0.01 g) for 100 g of glass was mixed thoroughly in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1600°C for 2h in air atmosphere with 2 intermittent stirrings for 0.5 minute each. Stirring was carried out using SiO₂ glass rod for homogenizing the glass melt. The molten glass was quenched at 25 degree Celsius followed by casting onto an iron mould and subsequently annealed properly. They were sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 89.8 x10⁻⁷/K. The T_{g} value obtained from dilatomer curve was 588°C. The refractive index was measured by a Prism Coupler (Model: 2010/M, Metricon Corporation, Pennington, NJ) at wavelength 633 nm and the value was 1.5243. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 89% .The dielectric constant (εᵣ) was measured with an accuracy of ±1% at a frequency of 1MHz using a LCR meter (Hioki, Model 3532-50 LCR Hitester) at 25 degree Celsius and the measured εᵣ value to be 8.18. Other properties of the glass of this composition has been mentioned Table 3.

### EXAMPLE-2

The starting raw materials were mixed in such a proportion that the resultant batch comprises the composition of sample **C-5** as mentioned in **Table 2.** Glass batch (Borax pentahydrate = 59.63 g, Feldspar = 4.12 g, Quartz = 43.19 g, Alumina = 0.76 g, Calcium carbonate = 18.70 g, Magnesium oxide = 0.43 g, and Titanium dioxide = 0.01 g) for 100 g of glass was mixed thoroughly in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1500°C for 2h in air atmosphere with 2 intermittent stirrings for 1 minute each. Stirring was carried out using SiO₂ glass rod for homogenizing the glass melt. The molten glass was quenched at 25 degree Celsius followed by casting onto an iron mould and subsequently annealed properly. They were sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 71x10⁻⁷/K. The T_{g} value obtained from dilatomer curve was 589°C. The refractive index was measured by a Prism Coupler (Model: 2010/M, Metricon Corporation, Pennington, NJ) at wavelength 633 nm and the value was 1.5291. The viscosity of the glass was measured by a viscometer (Vis 403, Bahr GmbH.) and the viscosity value measured at 1400°C was 1.3587 dPas. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 87% .The dielectric constant (εᵣ) was measured with an accuracy of ±1% at a frequency of 1MHz using a LCR meter (Hioki, Model 3532-50 LCR Hitester) at 25 degree Celsius and the measured εᵣ value to be 7.5. Other properties of the glass of this composition has been mentioned Table 3. The deformation behaviour of the block of glasses/batches were observed using a heating microscope (Expert System Solutions S.r.l, Misura 3 HSM, Modena, Italy). The glass compositions of borax pentahydrate originated sodium oxide (Na₂O) incorporated soda lime silicate container glass shows melting temperature (Tₘ) of 899°C compared to commercial container glass which shows melting behaviour at 1153°C. A huge reduction in melting temperature of 254°C has been observed for the glasses obtained by replacing 100 % of Na₂O of soda ash (C-5) with Na₂O of BP.

### EXAMPLE-3

The starting raw materials were mixed in such a proportion that the resultant batch comprises the composition of sample C-8 as mentioned in Table 2. Glass batch (Borax pentahydrate = 108.24 g, Feldspar = 4.12 g, Quartz = 22.85 g, Alumina = 0.76 g, Magnesium oxide = 0.43 g, and Titanium dioxide = 0.01 g) for 100 g of glass was mixed thoroughly in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1500°C for 1h in air atmosphere with 2 intermittent stirrings for 0.5 minute each. Stirring was carried out using SiO₂ glass rod for homogenizing the glass melt. The molten glass was quenched at 25 degree Celsius followed by casting onto an iron mould and subsequently annealed properly. They were sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 82.6 x 10⁻⁷/K. The T_{g} value obtained from dilatomer curve was 589°C. The refractive index was measured by a Prism Coupler (Model: 2010/M, Metricon Corporation, Pennington, NJ) at wavelength 633 nm and the value was 1.5058. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 89% .The dielectric constant (εᵣ) was measured with an accuracy of ±1% at a frequency of 1MHz using a LCR meter (Hioki, Model 3532-50 LCR Hitester) at 25 degree Celsius and the measured εᵣ value to be 7.56. Other properties of the glass of this composition has been mentioned Table 3.

### EXAMPLE-4

The starting raw materials were mixed in such a proportion that the resultant batch comprises the composition of sample F-2 as mentioned in Table 5. Glass batch (Borax pentahydrate = 15.86 g, Feldspar = 0.41 g, Quartz = 65.61 g, Alumina = 0.10 g, Calcium carbonate = 16.07 g, Soda ash = 18.29 g, Magnesium oxide = 4.00 g, and Titanium dioxide = 0.02 g) for 100 g of glass was mixed thoroughly in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1600°C for 2h in air atmosphere with 2 intermittent stirrings for 0.5 minute each. Stirring was carried out using SiO₂ glass rod for homogenizing the glass melt. The molten glass was quenched at 25 degree Celsius followed by casting onto an iron mould and subsequently annealed properly. They were sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 85.7 x 10⁻⁷/K. The T_{g} value obtained from dilatomer curve was 578°C. The refractive index was measured by a Prism Coupler (Model: 2010/M, Metricon Corporation, Pennington, NJ) at wavelength 633 nm and the value was 1.5228. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 88% .The dielectric constant (εᵣ) was measured with an accuracy of ±1% at a frequency of 1MHz using a LCR meter (Hioki, Model 3532-50 LCR Hitester) at 25 degree Celsius and the measured εᵣ value to be 10.12. Other properties of the glass of this composition has been mentioned Table 6.

### EXAMPLE-5

The starting raw materials were mixed in such a proportion that the resultant batch comprises the composition of sample **F-5** as mentioned in **Table 5.** Glass batch (Borax pentahydrate = 63.38 g, Feldspar = 0.41 g, Quartz = 42.71 g, Alumina = 0.10 g, Calcium carbonate = 16.07 g, Magnesium oxide = 4.00 g, and Titanium dioxide = 0.02 g) for 100 g of glass was mixed thoroughly in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1500°C for 2h in air atmosphere with 2 intermittent stirrings for 1.0 minute each. Stirring was carried out using SiO₂ glass rod for homogenizing the glass melt. The molten glass was quenched at 25 degree Celsius followed by casting onto an iron mould and subsequently annealed properly. They were sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 74.3x10⁻⁷/K. The T_{g} value obtained from dilatomer curve was 579°C. The refractive index was measured by a Prism Coupler (Model: 2010/M, Metricon Corporation, Pennington, NJ) at wavelength 633 nm and the value was 1.5337. The viscosity of the glass was measured by a viscometer (Vis 403, Bahr GmbH.) and the viscosity value measured at 1350°C was 1.4192 dPas. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 86% .The dielectric constant (εᵣ) was measured with an accuracy of ±1% at a frequency of 1MHz using a LCR meter (Hioki, Model 3532-50 LCR Hitester) at 25°C and the measured εᵣ value to be 9.33. Other properties of the glass of this composition has been mentioned Table 6. The deformation behaviors of the blocks of glass/batch pellets were observed using a heating microscope (Expert System Solutions S.r.l, Misura 3 HSM, Modena, Italy). The glass compositions of borax pentahydrate originated sodium oxide (Na₂O) incorporated soda lime silicate float glass shows melting temperature (Tₘ) of 874°C compared to commercial float glass which shows melting behaviour at 1114°C. A huge reduction in melting temperature of 240°C has been observed for the glasses obtained by replacing 100 % of Na₂O of soda ash with Na₂O of BP.

### EXAMPLE-6

The starting raw materials were mixed in such a proportion that the resultant batch comprises the composition of sample **F-8** as mentioned in **Table 5.** Batch for 100 g of glass was prepared by mixing Borax pentahydrate = 105.05 g, Feldspar = 0.41 g, Quartz = 22.65 g, Alumina = 0.10 g, Magnesium oxide = 4.00 g, and Titanium dioxide = 0.02 g in a porcelain bowl using white fiber spoons. The mixing was done for 15 minutes to ensure uniform mixing of raw materials. The glasses were prepared by melting in a 100 ml platinum crucible. Melting was carried out in an electrically heated raising hearth electric furnace (Heating element: Kanthal) at 1500°C for 1h in air atmosphere with 2 intermittent stirrings for 0.5 minute each. Stirring was carried out using SiO₂ glass rod for homogenizing the glass melt. The molten glass was quenched at 25 degree Celsius followed by casting onto an iron mould. As-cast glass block was subsequently annealed properly. Annealed glass block was sized and polished as required for different property evaluation. The CTE of the of 6 mm dia. glass cylinders were measured with an accuracy of ±1% in the temperature range 50°-350°C using a horizontal-loading dilatometer (Netzsch, Model 402 PC) and the CTE value measured to be 82.1 x 10⁻⁷/K. The T_{g} value obtained from dilatomer curve was 579°C. The refractive index was measured by a Prism Coupler (Model: 2010/M, Metricon Corporation, Pennington, NJ) at wavelength 633 nm and the value was 1.5168. Optical transmission spectrum was recorded on UV-Vis-NIR spectrophotometer (Perkin-Elmer, Lambda 20) at 25 degree Celsius and the transmission of 2 mm thick glass sample at 550 nm was measured to be 89% .The dielectric constant (εᵣ) was measured with an accuracy of ±1% at a frequency of 1MHz using a LCR meter (Hioki, Model 3532-50 LCR Hitester) at 25 degree Celsius and the measured εᵣ value to be 9.49. Other properties of the glass of this composition has been mentioned Table 6.

### ADVANTAGES OF THE INVENTION

The main advantages of the present invention are:
(a) The addition of borax pentahydrate originated boron oxide (B₂O₃) at its optimum level (28.5-30.3 wt.%) in the soda lime silicate glass reduce the glass melting temperature by 150-200°C.
(b) This lowering of glass melting temperature substantially saves energy. Thus these glass compositions are energy efficient.
(c) Due to saving energy, it reduces the production cost. So compositions are cost effective.
(d) It offers a great benefit to the glass industry and opens up a new application of borax pentahydrate.
(e) It eliminates the use of soda ash (Na₂CO₃) and limestone (CaCO₃), so it reduces the carbon dioxide (CO₂) emission and thereby global warming; thus these compositions are environmentally friendly.
(f) The incorporation of boron oxide in the invented silicate glasses reduces their coefficient of thermal expansion, increases their refractive index and hardness. Thus, it offers several technical benefits and improves the glass quality.
(g) The evaluated properties of the glasses have revealed that these invented glasses are suitable for manufacturing improved quality of container glasses, float glasses and glasses for ophthalmic lens blanks.

## Claims

1. Energy efficient soda lime silicate glass composition useful for manufacturing container, float and ophthalmic glasses, composition using borax pentahydrate, comprising (wt.%) B₂O₃ = 28.5 to 30.3 wt.%, SiO₂ = 22.68-74.62 wt.%, Na₂O = 13.0-23.5 wt.%, CaO = 0.0-10.5 wt.%, K₂O = 0.03-0.3 wt.%, Al₂O₃ = 0.15-1.3 wt.%, MgO = 0.43-4.0 wt.%, and Fe₂O₃+TiO₂ = 0.05-0.12 wt.%.

2. Soda lime silicate glass composition as claimed in claim 1, wherein the said glasses have density in the range of 2.312-2.575 g.cm⁻³.

3. Soda lime silicate glass composition as claimed in claim 1, wherein the said glasses have coefficient of thermal expansion (CTE, 50-300°C) in the range of (71.4-90.6) x 10⁻⁷ K⁻¹.

4. Soda lime silicate glass composition as claimed in claim 1, wherein the said glasses have glass transition temperature (T_{g}) in the range of 506-595°C.

5. Soda lime silicate glass composition as claimed in claim 1, wherein the said glasses have dilatometric softening point or temperature (T_{d}) in the range of 540-634°C.

6. Soda lime silicate glass composition as claimed in claim 1, wherein the said glasses have dielectric constant in the range of 7.41-10.23.

7. Soda lime silicate glass composition as claimed in claim 1, wherein the said glasses have refractive index in the range of 1.5058-1.5337.

8. Soda lime silicate glass composition as claimed in claim 1, wherein the said glasses have optical transmission at 550 nm for the glass thickness of 2.0 mm in the range of 83-90%.

9. Soda lime silicate glass composition as claimed in claim 1, wherein the said glasses have viscosity in the range of 1.36-1.85 dPa.s in the temperature range of 1150-1400°C.

10. Soda lime silicate glass composition as claimed in claim 1, wherein the said glasses have the Vicker's hardness in the range of 5.54 - 6.50 GPa.

11. A process for the preparation of borax pentahydrate originated B₂O₃ incorporated soda lime silicate glasses as claimed in claim 1 and the said process comprising the steps of:
i. mixing 12.45 to 79.35% by weight Borax pentahydrate, 0.31 to 3.41% by weight Feldspar, 16.75 to 54.51% by weight Quartz, 0.0 to 15.20% by weight Soda ash, 0.08 to 0.63% by weight Alumina, 0.0 to 15.46% by weight Calcium carbonate, 0.32 to 3.32% by weight Magnesium oxide and 0.008 to 0.017% by weight Titanium dioxide for a period in the range of 10 to 20 minutes to obtain an uniform mixture;
ii. melting the mixture as obtained in step (i) at temperature in the range of 1500 to 1600°C for period in the range of 1.0 to 2.0 h with 1 to 2 intermittent stirring for 0.4 to 0.6 min each to obtain homogenize glass melt;
iii. quenching the glass melt as obtained in step (ii) at temperature in the range of 1500 to 1600°C followed by casting and annealing to obtain borax pentahydrate originated boron oxide (B₂O₃) incorporated soda lime silicate glasses,
it being understood that the addition of borax pentahydrate originated boron oxide (B₂O₃) is at its optimum level (28.5 - 30.3 wt.%) in the soda lime silicate glass.

12. The process as claimed in claim 11, wherein the glass melting temperature is reduced by at least 150-200°C.

13. Use of a soda lime silicate glass composition as claimed in claim 1 for the manufacture of container, float and ophthalmic glasses.

## Patentansprüche

1. Energieeffiziente Kalknatronsilikatglas-Zusammensetzung, nützlich für die Herstellung von Behälter-, Floatglass- und augenoptischen Gläsern, wobei die Zusammensetzung, die Boraxpentahydrat verwendet, umfasst (in Gew.-%):
B₂O₃ = 28,5-30,3 Ges.-%, SiO₂ = 22,68-74,62 Gew.-%, Na₂O = 13,0-23,5 Gew.-%, CaO = 0,0-10,5 Gew.-%, K₂O = 0,03-0,3 Gew.-%, Al₂O₃ = 0,15-1,3 Gew.-%, MgO = 0,43-4,0 Gew.-% und Fe₂O₃+TiO₂ = 0,05-0,12 Gew.-%.

2. Kalknatronsilikatglas-Zusammensetzung nach Anspruch 1, wobei die Gläser eine Dichte im Bereich von 2,312-2,575 g.cm⁻³ aufweisen.

3. Kalknatronsilikatglas-Zusammensetzung nach Anspruch 1, wobei die Gläser einen Wärmeausdehnungskoeffizienten (CTE, 50-300 °C) im Bereich von (71,4-90,6) x 10⁻⁷ K⁻¹ aufweisen.

4. Kalknatronsilikatglas-Zusammensetzung nach Anspruch 1, wobei die Gläser eine Glasübergangstemperatur (T_{g}) im Bereich von 506-595 °C aufweisen.

5. Kalknatronsilikatglas-Zusammensetzung nach Anspruch 1, wobei die Gläser einen dilatometrischen Erweichungspunkt oder eine dilatometrische Temperatur (Td) im Bereich von 540-634 °C aufweisen.

6. Kalknatronsilikatglas-Zusammensetzung nach Anspruch 1, wobei die Gläser eine Dielektrizitätskonstante im Bereich von 7,41-10,23 aufweisen.

7. Kalknatronsilikatglas-Zusammensetzung nach Anspruch 1, wobei die Gläser einen Brechungsindex im Bereich von 1,5058-1,5337 aufweisen.

8. Kalknatronsilikatglas-Zusammensetzung nach Anspruch 1, wobei die Gläser eine optische Transmission bei 550 nm für die Glasdicke von 2,0 mm im Bereich von 83-90% aufweisen.

9. Kalknatronsilikatglas-Zusammensetzung nach Anspruch 1, wobei die Gläser eine Viskosität im Bereich von 1,36 bis 1,85 dPa.s im Temperaturbereich von 1150 bis 1400 °C aufweisen.

10. Kalknatronsilikatglas-Zusammensetzung nach Anspruch 1, wobei die Gläser eine Vickershärte im Bereich von 5,54 bis 6,50 GPa aufweisen.

11. Verfahren zur Herstellung von Kalknatronsilikatgläsern, die aus Boraxpentahydrat erzeugtes B₂O₃ eingebaut aufweisen, nach Anspruch 1 und wobei das Verfahren die folgenden Schritte umfasst:
i. Mischen von
12,45 bis 79,35 Gew.-% Borax-Pentahydrat, 0,31 bis 3,41 Gew.-% Feldspat, 16,75 bis 54,51 Gew.-% Quarz, 0,0 bis 15,20 Gew.-% Soda, 0,08 bis 0,63 Gew.-% Aluminiumoxid, 0,0 bis 15,46 Gew.-% Kalziumkarbonat, 0,32 bis 3,32 Gew.-% Magnesiumoxid und 0,008 bis 0,017 Gew.-% Titandioxid über einen Zeitraum im Bereich von 10 bis 20 Minuten, um eine gleichmäßige Mischung zu erhalten;
ii. Schmelzen der Mischung, wie in Schritt (i) erhalten, bei einer Temperatur im Bereich von 1500 bis 1600 °C über einen Zeitraum im Bereich von 1,0 bis 2,0 h unter 1- bis 2-maligem zwischenzeitlichem Rühren für jeweils 0,4 bis 0,6 min, um eine homogenisierte Glasschmelze zu erhalten;
iii. Abschrecken der Glasschmelze, wie in Schritt (ii) erhalten, bei einer Temperatur im Bereich von 1500 bis 1600 °C, gefolgt von Formgießen und Tempern, um Kalknatronsilikatgläser, die aus Boraxpentahydrat erzeugtes Boroxid (B₂O₃) eingebaut aufweisen, zu erhalten,
wobei es sich von selbst versteht, dass die Zugabe von aus Boroxidpentahydrat-erzeugtem Boroxid (B₂O₃) im Kalknatronsilikatglas auf seinem optimalen Niveau (28,5 - 30,3 Gew.-%) vorliegt.

12. Verfahren nach Anspruch 11, wobei die Glasschmelztemperatur um wenigstens 150-200 °C verringert wird.

13. Einsatz einer Kalknatronsilikatglas-Zusammensetzung nach Anspruch 1 für die Herstellung von Behälter-, Floatglass- und augenoptischen Gläsern.

## Revendications

1. Composition de verre de silicate sodo-calcique à haut rendement énergétique, utile pour la fabrication de verres de conditionnement, de verres float et de verres ophtalmiques utilisant du pentahydrate de borax, comprenant (% en poids) B₂O₃ = 28,5 à 30,3% en poids, SiO₂ = 22,68-74,62% en poids, Na₂O = 13,0-23,5% en poids, CaO = 0,0-10,5% en poids, K₂O = 0,03-0,3% en poids, Al₂O₃ = 0,15-1,3% en poids, MgO = 0,43-4,0% en poids, et Fe₂O₃+TiO₂ = 0,05-0,12% en poids.

2. Composition de verre de silicate sodo-calcique selon la revendication 1, dans laquelle lesdits verres ont une densité comprise entre 2,312 et 2,575 g.cm³

3. Composition de verre de silicate sodo-calcique selon la revendication 1, dans laquelle lesdits verres ont un coefficient de dilatation thermique (CTE, 50-300°C) dans la gamme de (71,4-90,6) x 10⁻⁷ K⁻¹.

4. Composition de verre de silicate sodo-calcique selon la revendication 1, dans laquelle lesdits verres ont une température de transition vitreuse (Tg) dans la gamme de 506-595°C.

5. Composition de verre de silicate sodo-calcique selon la revendication 1, dans laquelle lesdits verres ont un point ou une température de ramollissement dilatométrique (Td) dans la gamme de 540-634°C.

6. Composition de verre de silicate sodo-calcique selon la revendication 1, dans laquelle lesdits verres ont une constante diélectrique dans la gamme de 7,41-10,23.

7. Composition de verre de silicate sodo-calcique selon la revendication 1, dans laquelle lesdits verres ont un indice de réfraction dans la gamme de 1,5058-1,5337.

8. Composition de verre de silicate sodo-calcique selon la revendication 1, dans laquelle lesdits verres ont une transmission optique à 550 nm pour une épaisseur de verre de 2,0 mm dans la gamme de 83-90%.

9. Composition de verre de silicate sodo-calcique selon la revendication 1, dans laquelle lesdits verres ont une viscosité dans la gamme de 1,36 à 1,85 dPa.s dans la gamme de température de 1150-1400°C.

10. Composition de verre de silicate sodo-calcique selon la revendication 1, dans laquelle lesdits verres ont une dureté Vicker dans la gamme de 5,54 - 6,50 GPa.

11. Un procédé pour la préparation de verres de silicate sodo-calcique incorporant du B₂O₃ provenant du pentahydrate de borax comme revendiqué dans la revendication 1 et ledit procédé comprenant les étapes:
i. de mélange de 12,45 à 79,35% en poids de pentahydrate de borax, 0,31 à 3,41% en poids de feldspath, 16,75 à 54,51% en poids de quartz, 0,0 à 15,20% en poids de soude, 0,08 à 0,63% en poids d'alumine, 0,0 à 15,46% en poids de carbonate de calcium, 0,32 à 3,32% en poids d'oxyde de magnésium et 0,008 à 0,017% en poids de dioxyde de titane pendant une période comprise entre 10 et 20 minutes pour obtenir un mélange uniforme;
ii. de fusion du mélange obtenu à l'étape (i) à une température comprise entre 1500 et 1600°C pendant une durée de 1,0 à 2,0 h sous agitation intermittente pendant 0,4 à 0,6 min pour obtenir un verre fondu homogène;
iii. de trempe du verre fondu obtenu dans l'étape (ii) à une température comprise entre 1500 et 1600°C, suivie d'un coulage et d'un recuit pour obtenir des verres de silicate sodo-calcique incorporant de l'oxyde de bore (B₂O₃) d'origine pentahydrate de borax,
étant entendu que l'addition d'oxyde de bore (B2O3) provenant du pentahydrate de borax est à son niveau optimal (28,5 - 30,3% en poids) dans le verre de silicate sodo-calcique.

12. Le procédé selon la revendication 11, dans lequel la température de fusion du verre est réduite d'au moins 150-200°C.

13. Utilisation d'une composition de verre au silicate sodo-calcique selon la revendication 1 pour la fabrication de verres de conditionnement, de verres float et de verres ophtalmiques.
